# FASCICULE DE BREVET EUROPEEN

(11) **EP 3 511 854 B1**
(45) Date de publication et mention de la délivrance du brevet: **19.06.2024**
(21) Numéro de dépôt: 19150424.0
(22) Date de dépôt: 04.01.2019
(51) Int. Cl.: G06F 21/44, B41J 2/175, G06F 21/73

(54) **PROCÉDÉ ET CIRCUIT D'AUTHENTIFICATION**
AUTHENTIFIZIERUNGSVERFAHREN UND SCHALTUNG
AUTHENTICATION METHOD AND CIRCUIT

(30) Priorité: 16.01.2018 FR 1850332
(43) Date de publication de la demande: 17.07.2019
(73) Titulaire: STMICROELECTRONICS (ROUSSET) SAS, 13790 Rousset (FR)
(72) Inventeur: MARINET, Fabrice, 13790 CHATEAUNEUF LE ROUGE (FR)
(74) Mandataire: Cabinet Beaumont

(56) Documents cités:
- EP-A2- 2 605 175
- WO-A1-2015/030818
- US-A1- 2005 050 325

## Description

### Domaine

La présente description concerne de façon générale les circuits et systèmes électroniques et plus particulièrement un mécanisme de vérification de l'authenticité d'un produit associé à un dispositif.

### Exposé de l'art antérieur

La présence de produits, en particulier de consommables, non authentiques d'un dispositif constitue un problème pour le fabricant du dispositif et pour les fournisseurs autorisés des consommables authentiques, notamment lors de retours pour problèmes fonctionnels. Il est important de pouvoir distinguer les produits authentiques des produits non authentiques.

Les processus d'authentification ont pour rôle de vérifier que le produit ou consommable apparié au dispositif est bien authentique ou autorisé. Pour cela, les dispositifs et les produits associés sont équipés de circuits électroniques exécutant des protocoles de vérification d'authenticité lors d'une mise en place d'un nouveau produit, voire périodiquement.

Le document US2005/ 050325 décrit un dispositif de vérification d'identifiant, un dispositif de génération d'identifiant et un système d'authentification.

Le document EP2605175 décrit un procédé et un appareil pour vérifier une unité remplaçable et un dispositif de communication.

Le document WO2015/030818 décrit une authentification par mécanisme de challenge-response temporel.

### Résumé

Un mode de réalisation pallie tout ou partie des inconvénients des processus d'authentification de produits usuels.

Un mode de réalisation propose un processus d'authentification compatible avec diverses natures de dispositifs et de produits.

Ainsi, un mode de réalisation prévoit un procédé d'authentification tel que défini dans les revendications.

Un mode de réalisation prévoit un système tel que revendiqué.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique, un exemple de système dispositif-produit du type auquel s'appliquent les modes de réalisation décrits ;
la figure 2 représente, de façon très schématique et sous forme de blocs, un mode de réalisation d'un circuit électronique du type équipant les dispositifs et produits du système de la figure 1 ;
la figure 3 représente, de façon très schématique et sous forme de blocs, un mode de réalisation d'un circuit d'authentification ; et
la figure 4 représente, de façon schématique et sous forme de blocs, un mode de mise en oeuvre d'un procédé d'authentification d'un produit par un dispositif.

### Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation qui vont être décrits ont été représentés et seront détaillés. En particulier, les éventuels mécanismes d'échange d'informations entre les circuits des dispositifs et des produits ou consommables associés n'ont pas été détaillés, les modes de réalisation décrits étant compatibles avec les mécanismes usuels.

Sauf précision contraire, lorsque l'on fait référence à deux éléments connectés entre eux, cela signifie directement connectés sans élément intermédiaire autre que des conducteurs, et lorsque l'on fait référence à deux éléments reliés ou couplés entre eux, cela signifie que ces deux éléments peuvent être directement reliés (connectés) ou reliés par l'intermédiaire d'un ou plusieurs autres éléments.

Dans la description qui suit, lorsque l'on fait référence aux termes "approximativement", "environ" et "de l'ordre de", cela signifie à 10 % près, de préférence à 5 % près.

On fera par la suite référence à un exemple d'application où le système dispositif-produit concerne les imprimantes (dispositifs) et leurs cartouches d'encre (produits ou consommables). Toutefois, tout ce qui est décrit s'applique à tout système dispositif-produit pour lequel des problèmes similaires se posent et, plus généralement, à toute authentification d'un circuit électronique par un autre respectant les fonctionnalités décrites.

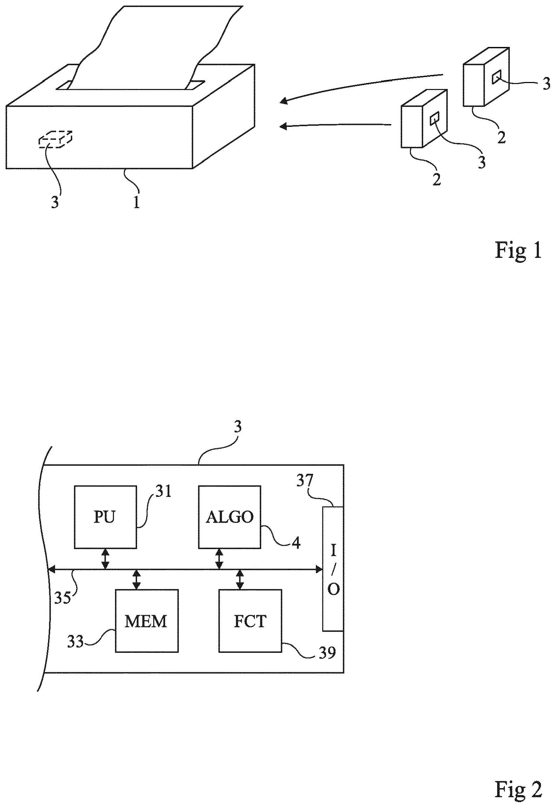

La figure 1 représente, de façon très schématique, un exemple de système dispositif-produit du type auquel s'appliquent à titre d'exemple les modes de réalisation décrits.

On suppose que le dispositif est une imprimante 1 et que les produits ou consommables sont des cartouches d'encre 2 pour cette imprimante.

Afin de vérifier l'authenticité des cartouches, on met en oeuvre un mécanisme d'authentification de la ou des cartouches 2 par l'imprimante 1, voire de l'imprimante par la ou les cartouches. Pour cela, les imprimantes 1 et les cartouches 2 sont équipées de circuits électroniques 3 capables d'échanger des informations afin de mettre en oeuvre un processus d'authentification. La communication peut s'effectuer de façon filaire ou sans fil, par exemple par communication sans contact en champ proche (NFC - Near Field Communication).

Les circuits électroniques 3 peuvent avoir d'autres fonctions comme, par exemple, une mesure du niveau d'encre dans la cartouche et la communication peut donc également traiter d'autres processus que l'authentification. Selon les applications, l'authentification peut être effectuée lors de chaque mise en place de cartouche, à chaque mise sous tension de l'imprimante, avant chaque impression, périodiquement, etc.

La figure 2 représente, de façon très schématique et sous forme de blocs, un mode de réalisation d'un circuit électronique 3 du type équipant les dispositifs (imprimantes) et produits (cartouches) du système de la figure 1.

Le circuit 3 comporte :
une entité de calcul 31 (PU), par exemple une machine d'états, un microprocesseur, un circuit logique programmable, etc. ;
une ou plusieurs zones 33 (MEM) de stockage volatile et/ou non volatile pour stocker tout ou partie des données et programmes ;
un ou plusieurs bus 35 de données, d'adresses et/ou de commandes entre les différents éléments internes au circuit 3 ;
une interface d'entrée-sortie 37 (I/O) de communication avec l'extérieur du circuit 3 ; et
divers autres circuits en fonction de l'application, symbolisés en figure 2 par un bloc 39 (FCT).

Selon le mode de réalisation représenté, le circuit 3 comporte en outre un circuit ou une fonction d'authentification 4 (ALGO) mettant en oeuvre un processus d'authentification de la ou des cartouches de l'imprimante. Selon les modes de réalisation, le bloc 4 met au moins en oeuvre un calcul de signature.

Le bloc 4 est un circuit exécutant l'algorithme cryptographique de façon matérielle (logique câblée). Son rôle est d'effectuer un calcul de signature en parallèle à l'exécution d'un code logiciel comme on le verra par la suite.

Pour détourner les mécanismes d'authenticité, on rencontre deux catégories de circuits capables de répliquer un mécanisme d'authentification alternatif.

Une première catégorie consiste en des circuits clones, c'est-à-dire des circuits en tout point identiques à un circuit authentique. Ces circuits sont généralement obtenus en reproduisant l'ensemble de la topographie (design) d'un circuit authentique, de sorte que le circuit fonctionne de la même façon.

Une deuxième catégorie de circuits non authentiques, plus répandue car plus simple à réaliser, consiste à émuler le fonctionnement d'un circuit authentique en mettant en oeuvre un programme adapté par un microprocesseur standard. Cela requiert de percer le secret du mécanisme d'authentification (en particulier la clé de signature) par des attaques cryptographiques de type par canaux cachés ou par rétroconception, mais cela reste plus simple et souvent plus accessible que de cloner le circuit (sa topographie).

Une troisième catégorie consiste en un mixte des deux.

Les modes de réalisation décrits proposent de contrer les deuxième et troisième catégories de circuits non authentiques.

On prévoit un mécanisme d'authentification basé sur une signature qui a la particularité d'être liée à la topographie du circuit intégré ou à la partie de circuit participant à l'authentification et exécutant cette signature. On fera par la suite référence au circuit d'authentification mais ce qui est décrit peut ne concerner qu'une partie de ce circuit.

On prévoit également d'équiper les imprimantes (dispositifs) et les cartouches (produits) de circuits d'authentification identiques, c'est-à-dire présentant des topographies identiques, de façon qu'un traitement exécuté sur un des circuits se traduise, lorsqu'il est exécuté sur l'autre circuit, par un comportement identique de ce dernier. Par comportement, on entend que le comportement électrique du circuit est identique lors de l'exécution d'un calcul, d'un programme ou d'opérations identiques.

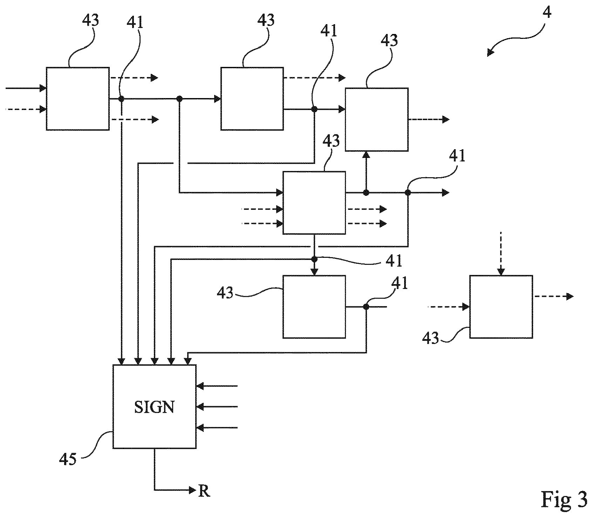

La figure 3 représente, de façon très schématique et sous forme de blocs, un mode de réalisation d'un circuit d'authentification 4.

Selon ce mode de réalisation, le circuit d'authentification 4 est un circuit intégré dont plusieurs noeuds numériques 41 (représentant des états 0 ou 1) sont connectés à un bloc 45 (SIGN) qui combine les états respectifs pour calculer une signature R. Ainsi, la signature R est liée à la topographie du circuit 4 en ce sens qu'un circuit présentant une topographie différente (par exemple un processeur standard) fournira une signature différente.

Les noeuds 41 sont quelconques. On peut choisir n'importe quel point du circuit pour le combiner à d'autres et obtenir la signature R. Dans l'exemple de la figure 3, on a illustré des blocs 43, symbolisant des circuits logiques dont les sorties respectives sont non seulement reliées à un ou plusieurs autres blocs 43, mais sont également connectées au bloc 45 de calcul de signature.

La fonction de calcul de signature exécutée par le bloc 45 n'a pas besoin d'être complexe. En effet, l'important est que cette signature soit reproduite par un circuit identique exécutant un même cycle d'instructions ou étapes d'un code ou programme avec de mêmes arguments. Ainsi, n'importe quel calcul de signature convient, par exemple une fonction de hachage, voire même une comparaison directe d'un mot représentant l'ensemble des états prélevés. Toutefois, prévoir une combinaison ou un traitement cryptographique pour calculer une signature accroît la robustesse de l'authentification. Par « cycle », on désigne une portion de code (programme), une opération ou plus généralement toute phase de fonctionnement susceptible de changer tout ou partie des états des noeuds 41.

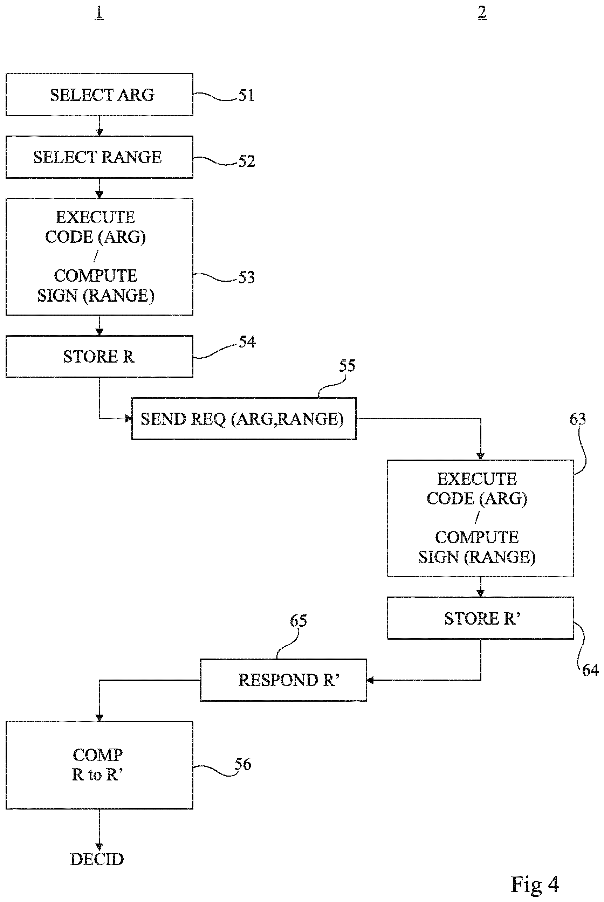

La figure 4 représente, de façon schématique et sous forme de blocs, un mode de mise en oeuvre d'un procédé d'authentification d'un produit par un dispositif.

Dans cet exemple, un processus d'authentification consiste à exécuter un même code ou séquence d'instructions côté circuit de l'imprimante et circuit de la cartouche, et à calculer la signature sur un cycle de ce code défini par un ou plusieurs arguments (données variables) pris en compte par le code et par une plage d'instructions de ce code. Le calcul de signature est effectué en parallèle à l'exécution du code, c'est-à-dire que le bloc 45 de calcul de signature prend en compte les valeurs des différents noeuds 41 pendant que les circuits logiques 43 exécutent le code.

De préférence, le code exécuté et sur lequel est calculée la signature est fixe. Toutefois, de façon à faire varier la signature, le ou les arguments manipulés par le code sont variables, de même que l'instant du code ou la plage d'instructions de prise en compte des états des noeuds 41 pour le calcul de signature.

Dans l'exemple de la figure 4, le circuit 4 de l'imprimante 1 commence (bloc 51, SELECT ARG) par sélectionner un ou plusieurs arguments ou paramètres du code à exécuter. Cette sélection est, par exemple aléatoire parmi un ensemble de paramètres. Puis, le circuit sélectionne (bloc 52, SELECT RANGE), par exemple de façon aléatoire, une plage d'instructions sur laquelle va être calculée une signature R. Le circuit de l'imprimante exécute alors (bloc 53, EXECUTE CODE(ARG) / COMPUTE SIGN(RANGE)) la séquence d'instructions (cycle) du code avec les arguments ARG sélectionnés à l'étape 51. En parallèle, le circuit 45 calcule la signature R de cette exécution sur la plage RANGE sélectionnée à l'étape 52. La signature R, qui dépend de l'exécution opérée, est mémorisée (bloc 54, STORE R) par le circuit 3 de l'imprimante 1. Puis, l'imprimante (le circuit 3) envoie une requête d'authentification (bloc 55, SEND REQ(ARG, RANGE)) au circuit 3 de la cartouche 2. Cette requête contient le ou les arguments ARG ou paramètres ainsi qu'une information représentative de la plage RANGE pendant laquelle effectuer le calcul de signature.

Cette requête déclenche, côté cartouche 2, l'exécution (bloc 63, EXECUTE CODE (ARG) / COMPUTE SIGN(RANGE)) de la même portion de programme ou de code que celle du bloc 53 ainsi que le calcul de signature dans la plage définie par la plage RANGE. Comme le circuit est normalement identique à celui de l'imprimante, la signature R' obtenue, par suite de cette exécution, est, pour une cartouche authentique, identique à la signature R obtenue côté imprimante. A l'inverse, si le circuit de la cartouche n'est pas identique à celui de l'imprimante, la signature R' générée ne sera pas égale à la signature R. La cartouche mémorise (bloc 64, STORE R') la signature R' calculée et l'envoie à l'imprimante en réponse à la requête 55 (bloc 65, RESPOND R').

L'imprimante (son circuit 3 ou 4) compare (bloc 56, COMP R to R') les deux signatures R et R' et, sur cette base, fournit un signal DECID dont l'état indique si la cartouche est authentique ou non.

Le mode de réalisation de la figure 4 est un mode de réalisation simplifié pour exposer les principes de l'authentification réalisée. Les calculs et les échanges pourront s'accompagner de toute mesure de protection par ailleurs usuelle, par exemple un chiffrement symétrique ou asymétrique des transmissions entre les circuits 3. Par ailleurs, l'ordre de calcul des signatures pourra être inversé (d'abord effectué côté cartouche) ou être effectué en parallèle (l'imprimante déclenche l'exécution du cycle après avoir envoyé la requête à la cartouche), etc.

Le nombre de noeuds 41 prélevés sur le circuit 4 et dont les états électriques sont pris en compte pour la signature conditionne la robustesse de la signature calculée. Plus ce nombre est élevé, plus la détermination logicielle de la signature nécessite un espace mémoire important pour stocker la table des signatures possibles. Par exemple, on prévoit plus de 1000 noeuds pour calculer la signature.

La répartition des noeuds 41 du circuit 4 pris en compte dans le calcul de signature dépend de l'application et est, de préférence, choisie pour que tous les noeuds 41 soient dans un même circuit intégré. Plus les noeuds sont répartis dans une surface importante du circuit, plus cela rend complexe la reproduction de la signature et cela oblige à cloner une partie importante du circuit électronique. Ainsi, les noeuds peuvent être pris dans le circuit 4, voire plus largement dans le processeur 31, ou encore dans n'importe quelle portion du circuit 3.

La plage d'instructions RANGE à l'issue de l'exécution de laquelle est évaluée la signature est de préférence variable, tout comme les arguments ARG.

De même, les arguments ou paramètres ARG sont de préférence variables.

La plage et les arguments sont, par exemple, sélectionnés aléatoirement par l'imprimante à chaque vérification de signature.

La taille de la signature R n'est pas critique. Toutefois, une signature sur un trop petit nombre de bits accroît le risque d'une authentification par hasard. Ainsi, selon un mode de réalisation préféré, la signature comporte au moins une centaine de bits.

Les arguments et le nombre de cycles constituent uniquement un mode de réalisation particulier. En variante, l'imprimante (ou la cartouche) peut envoyer dans la requête la portion de code à exécuter. La signature est alors basée sur ce code. D'une authentification à une autre, la portion de code à prendre en compte pour la signature peut varier.

Un avantage des modes de réalisation décrits est qu'ils rendent particulièrement complexe la réalisation d'un clone logiciel, c'est-à-dire utilisant un circuit qui ne correspond pas à une reproduction à l'identique du circuit que comporte l'imprimante. En effet, il faudrait cloner de façon logicielle le mécanisme d'authentification, ce qui requiert de connaître et de mémoriser l'ensemble des résultats de signature afin d'être en mesure de fournir la réponse correcte à une requête de l'imprimante. La taille requise pour la mémorisation de ces réponses peut vite devenir un problème, en particulier si, côté imprimante, on fait varier la plage d'instructions utilisée pour le calcul de signature ou ses arguments pris en compte.

Divers modes de réalisation ont été décrits. Diverses modifications apparaîtront à l'homme de l'art. En particulier, bien que l'on ait fait référence à une authentification d'une cartouche par une imprimante, une authentification inverse est également possible. Le mécanisme de calcul de signature décrit est compatible avec une authentification mutuelle. En outre, la mise en oeuvre pratique des modes de réalisation qui ont été décrits est à la portée de l'homme du métier en utilisant les indications fonctionnelles données ci-dessus.

## Revendications

1. Procédé d'authentification d'un premier circuit électronique (3) par un deuxième circuit électronique (3) de topographie identique au premier circuit, dans lequel :
le deuxième circuit (3) envoie (55) une requête de calcul de signature (R') au premier circuit (3), cette requête incluant le code à exécuter pour le calcul de signature (R') ;
chaque circuit calcule une signature (R, R') en combinant des états respectifs de noeuds électriques quelconques (41) répartis dans le circuit correspondant, la signature étant calculée en parallèle à l'exécution du code à exécuter, influençant les états de tout ou partie des noeuds (41) ;
le premier circuit (3) envoie la signature (R') qu'il a calculée au deuxième circuit (4) ; et
le deuxième circuit compare les deux signatures (R, R') .

2. Procédé selon la revendication 1, dans lequel le deuxième circuit (3) sélectionne un ou plusieurs paramètres ou arguments à appliquer au code.

3. Procédé selon la revendication 1 ou 2, dans lequel le deuxième circuit sélectionne une plage du code sur laquelle la signature (R, R') est calculée.

4. Procédé selon la revendication 2 ou 3, dans lequel la sélection de la plage ou des arguments est aléatoire.

5. Procédé selon l'une quelconque des revendications 2 à 4, dans lequel ladite requête inclut les arguments ou la plage.

6. Procédé selon l'une quelconque des revendications 1 à 5, dans lequel le nombre de noeuds (41) pris en compte dans le calcul de la signature (R, R') est supérieur à 1000.

7. Procédé selon l'une quelconque des revendications 1 à 6, dans lequel le premier circuit (3) est associé à une cartouche d'imprimante (2), le deuxième circuit (3) étant associé à l'imprimante (1).

8. Système comportant un premier circuit et un deuxième circuit selon la revendication 1, comportant chacun une fonction adaptée pour mettre en oeuvre un procédé d'authentification selon l'une quelconque des revendications 1 à 7.

9. Système d'authentification d'un produit (2) par un dispositif (1), dans lequel le produit comporte un premier circuit selon la revendication 1 et le dispositif comporte un deuxième circuit selon la revendication 1.

10. Système selon la revendication 9, dans lequel le dispositif est une imprimante et le produit est une cartouche d'imprimante.

## Patentansprüche

1. Verfahren zur Authentifizierung einer ersten elektronischen Schaltung (3) durch eine zweite elektronische Schaltung (3), die eine identische Topographie wie die erste Schaltung aufweist, wobei:
die zweite Schaltung (3) eine Anforderung zur Berechnung einer Signatur (R') an die erste Schaltung (3) sendet (55), wobei diese Anforderung den auszuführenden Code zur Berechnung der Signatur (R') enthält;
jede Schaltung eine Signatur (R, R') berechnet, indem sie die jeweiligen Zustände aller in der entsprechenden Schaltung verteilten elektrischen Knoten (41) kombiniert, wobei die Signatur (R, R') parallel zur Ausführung eines Codes berechnet wird, der die Zustände aller oder eines Teils der Knoten (41) beeinflusst;
die erste Schaltung (3) die von ihr berechnete Signatur (R') an die zweite Schaltung (4) sendet; und
die zweite Schaltung beide Signaturen (R, R') vergleicht.

2. Verfahren nach Anspruch 1, wobei die zweite Schaltung (3) einen oder mehrere Parameter oder Argumente auswählt, die auf den Code anzuwenden sind.

3. Verfahren nach Anspruch 1 oder 2, wobei die zweite Schaltung einen Bereich des Codes auswählt, über den die Signatur (R, R') berechnet wird.

4. Verfahren nach Anspruch 2 oder 3, wobei die Auswahl des Bereichs oder der Argumente zufällig ist.

5. Verfahren nach einem der Ansprüche 2 bis 4, wobei die Anfrage die Argumente oder den Bereich enthält.

6. Verfahren nach einem der Ansprüche 1 bis 5, wobei die Anzahl der Knoten (41), die bei der Berechnung der Signatur (R, R') berücksichtigt werden, größer als 1.000 ist.

7. Verfahren nach einem der Ansprüche 1 bis 6, wobei die erste Schaltung (3) einer Druckerkassette (2) zugeordnet ist und die zweite Schaltung (3) dem Drucker (1) zugeordnet ist.

8. System mit einer ersten Schaltung und einer zweiten Schaltung nach Anspruch 1, die jeweils eine Funktion aufweisen, die geeignet ist, das Authentifizierungsverfahren nach einem der Ansprüche 1 bis 7 zu implementieren.

9. System zur Authentifizierung eines Produkts (2) durch eine Vorrichtung (1), wobei das Produkt eine erste Schaltung nach Anspruch 1 aufweist und die Vorrichtung eine zweite Schaltung nach Anspruch 1 aufweist.

10. System nach Anspruch 9, wobei die Vorrichtung ein Drucker ist und das Produkt eine Druckerkassette ist.

## Claims

1. A method of authenticating a first electronic circuit (3) by a second electronic circuit (3) having an identical topography as the first circuit, wherein:
the second circuit (3) sends (55) a request to calculate a signature (R') to the first circuit (3), this request including the code to be executed for the calculation of the signature (R');
each circuit calculates a signature (R, R') by combining the respective states of any electric nodes (41) distributed in the corresponding circuit, the signature (R, R') being calculated in parallel with the execution of a code influencing the states of all or part of the nodes (41);
the first circuit (3) sends the signature (R') that it has calculated to the second circuit (4); and
the second circuit compare both signatures (R, R').

2. The method of claim 1, wherein the second circuit (3) selects one or a plurality of parameters or arguments to be applied to the code.

3. The method of claim 1 or 2, wherein the second circuit selects a range of the code over which the signature (R, R') is calculated.

4. The method of claim 2 or 3, wherein the selection of the range or of the arguments is random.

5. The method of any of claims 2 to 4, wherein said request includes the arguments or the range.

6. The method of any of claims 1 to 5, wherein the number of nodes (41) taken into account in the calculation of the signature (R, R') is greater than 1,000.

7. The method of any of claims 1 to 6, wherein the first circuit (3) is associated with a printer cartridge (2), the second circuit (3) being associated with the printer (1).

8. A system comprising a first circuit and a second circuit according to claim 1, each comprising a function adapted to implement the authentication method of any of claims 1 to 7.

9. A system of authentication of a product (2) by a device (1), wherein the product comprises a first circuit according to claim 1 and the device comprises a second circuit according to claim 1.

10. The system of claim 9, wherein the device is a printer and the product is a printer cartridge.
